# EUROPEAN PATENT APPLICATION

(11) **EP 3 533 751 A1**
(43) Date of publication of application: **04.09.2019**
(21) Application number: 18159425.0
(22) Date of filing: 01.03.2018
(51) Int. Cl.: B66C 13/04, B66D 3/26, B66D 3/24

(54) **WINCH**

(71) Applicant: Volohovs, Dmitrijs, Riga 1082 (LV)
(72) Inventor: Volohovs, Dmitrijs, Riga 1082 (LV)
(74) Representative: Katérle, Axel

(57) **Abstract**

We describe a winch (200) comprising a rope (2) and a rigid member (4) coupled, at a first end portion of the rope (2), to the rope (2). The rigid member (4) is coupleable to a load (1) raisable and/or lowerable by the winch (200), wherein the rigid member (4) is configured to substantially increase an effective length of a said load (1) to stabilize said load (1) when being raised and/or lowered by the winch (200).

## Description

### FIELD OF THE INVENTION

The present invention generally relates to a winch comprising a rigid member used to stabilize a load when being raised and/or lowered by the winch, and a winch and method for wirelessly charging an electrical device comprised in or coupled to the load.

### BACKGROUND TO THE INVENTION

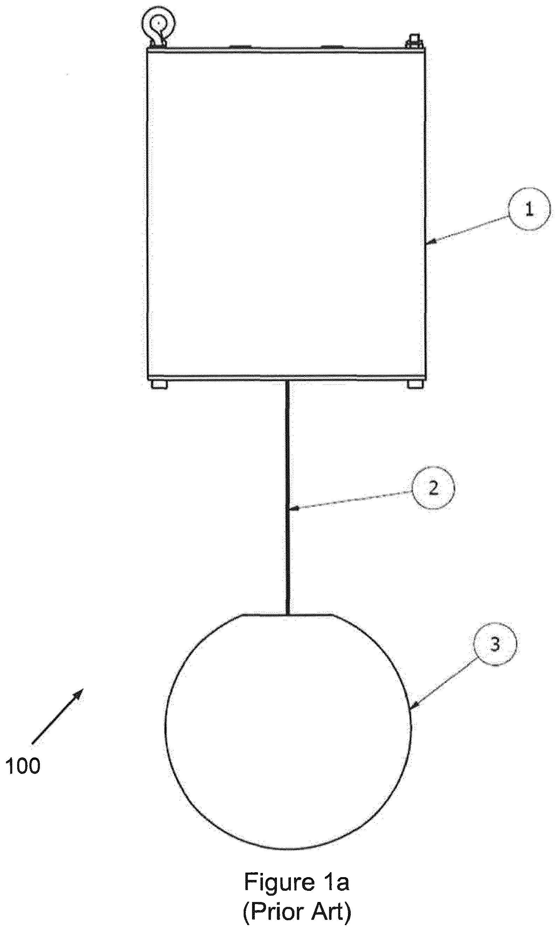

Figure 1a depicts a side-view of a schematic illustration of a winch 100 according to the prior art. In this example, the winch 100 comprises a gearbox 1 and a rope 2. The rope 2 is attached to a load 3 which can be raised by winding the rope 2 using the gearbox 3.

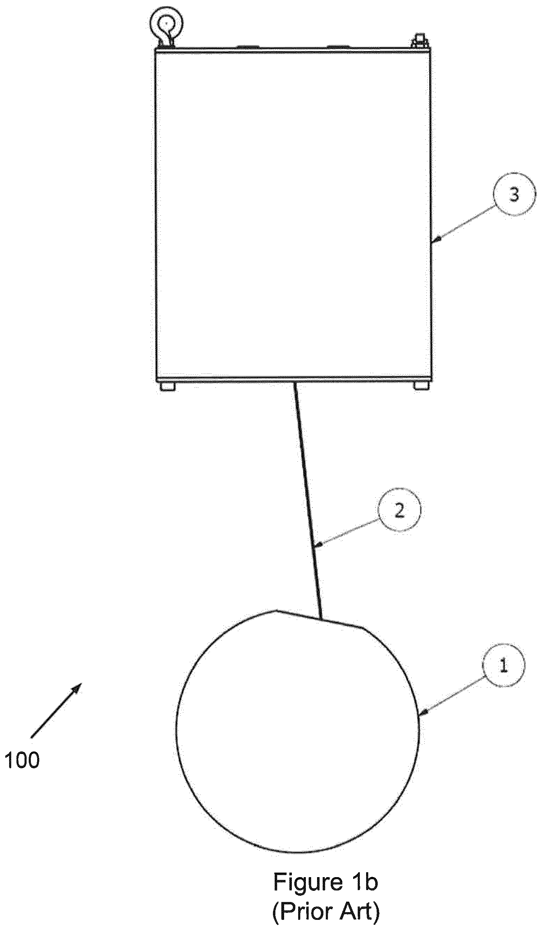

Upon fast movement of the load when the rope is being wound or unwound, the load may start to sway or oscillate around an axis defined by the gravitational force. This is shown in Figure 1b which depicts the schematic illustration of Figure 1a, whereby the rope deviates from the ideal, original axial alignment as the load starts swaying forth and back.

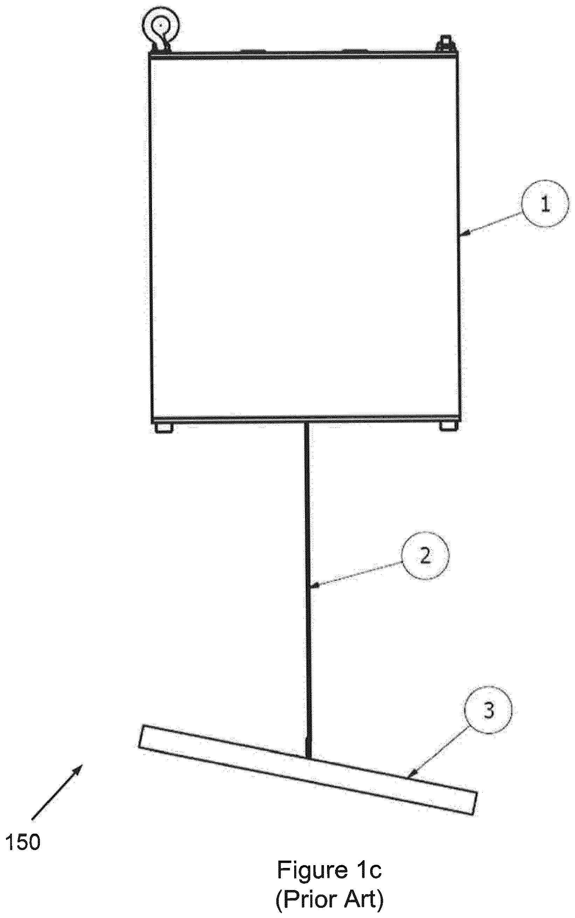

Figure 1c shows a side-view of a schematic illustration of a further winch 150 according to the prior art. In this example, a load 3 which has a flat or pancake-like shape is attached to the rope 2.

Similarly to the winch 100, the load 3 which is attached to the rope 2 of the winch 150 may start swaying or oscillating around an axis defined by the gravitational force (being parallel to the direction of the rope 2 in a stable position in which the rope does not move) upon fast movement of the load when the rope is being wound or unwound.

There is therefore a need for improvements of winches, including providing further functionalities of winches.

### SUMMARY OF THE INVENTION

Winches and a method for wirelessly charging an electrical device according to the present disclosure are set out in the independent claims. Preferred embodiments of the winches and the method are outlined in the dependent claims.

We describe a winch comprising: a rope; and a rigid member coupled, at a first end portion of the rope, to the rope, wherein the rigid member is coupleable to a load raisable and/or lowerable by the winch, and wherein the rigid member is configured to substantially increase an effective length of a said load to stabilize said load when being raised and/or lowered by the winch.

The rigid member may hereby be an elongated rigid member which may, for example, be coupled or connected to the rope directly or indirectly via an attachment (for example, but not limited to, a solid ring or hook) fixed to the rope. The elongated rigid member may hereby be configured to substantially increase the effective length of the load which is to be raised and/or lowered by the winch.

In some examples, for a given length of the load (measured, for example, from one end of the load or a center of mass of the load to the other end at which point the load may be connected or coupled to the rigid member) along an axis defined by the rope (for example when the rope is in a still, non-moving position, such that the axis may be parallel to the gravitational force), the rigid member may substantially increase the effective length of the load by increasing said length by 10%, preferably by 20%, more preferably by 30%, more preferably by 40%, more preferably by 50%, more preferably by 60%, more preferably by 70%, more preferably by 80%, more preferably by 90%, more preferably by 100%, or more preferably by more than 100%.

The inventors have realized that increasing the effective length of the load by coupling a rigid member between the rope and the load allows for stabilizing the load when being raised and/or lowered by the winch, in particular during relatively fast movements, i.e. movements of the load faster than a threshold. In some examples, for a certain deviation of the rope from an ideal axial alignment (for example, parallel to the gravitational force), during swaying of the load, a tilting angle of the load from an original value in which the load does not move may be reduced by increasing the effective length of the load. As outlined above, this allows for stabilizing the load when being moved by the winch.

In some example implementations, the winch further comprises a gearbox coupled, at a second end portion of the rope, to the rope, wherein the first end portion of the rope is opposite to the second end portion of the rope, and wherein the gearbox is configured to wound and/or unwound the rope. This may be particularly advantageous as no physical human force may be needed for the load to be raised and/or lowered.

In some variants of the winch, the rigid member comprises a solid connector fixed to the rope. Providing a solid connector fixed to the rope may advantageously allow for a more stable connection to be provided between the rope and the load. In some example implementations, the rigid member may comprise a plastic cover arranged around the solid connector. This may be particularly advantageous as the connection between the rigid member and the rope on the one hand, and/or between the rigid member and the load on the other hand may be protected, thereby reducing or minimizing any deterioration of such a connection or connections.

In some example implementations of the winch, the rigid member comprises a semi-rigid cable. Such a semi-rigid cable may allow for a coupling between the rope and the load via the semi-rigid cable to be provided, in which coupling any forces acting on the load caused by a deviation of the rope from the original, ideal axial alignment (for example, parallel to the gravitational force) may be dampened. This may further reduce swaying of the load when being moved by the winch.

We further describe a winch, in particular according to one or more of the above-specified variants and example implementations, wherein the rigid member comprises a ferromagnetic or ferrimagnetic material, and wherein the rigid member is configured as a transformer core for wirelessly charging an electrical device of a said load.

The inventors have realized that by providing a rigid member, arranged between and coupled to a rope and a load, may alternatively or additionally be used as a transformer core, thereby providing for an alternative or additional functionality of the rigid member. Using the rigid member which comprises a ferromagnetic or ferrimagnetic material allows for much faster charging of such an electrical device compared to coreless charging systems.

In some example implementations, the winch further comprises a first transformer coil penetrable by the rigid member upon raising and/or lowering of a said load by the winch. In some variants, the first transformer coil is arranged on or coupled or connected to the gearbox of the winch. However, it will be understood that alternative arrangements may be provided.

The first transformer coil may hereby be arranged with its winding(s) around an axis defined by the rope (in particular when the rope is in a still, non-moving position). As the rope is wound and/or unwound, the rigid member may be driven into and out of the first transformer coil. When the rigid member and the first transformer coil are aligned along the axis defined by the rope in a certain position, the rigid member and the first transformer coil may form part of a transformer which may be used in order to wirelessly charge the electrical device. A charging system external to the winch may hereby be avoided.

In some variants, the winch further comprises a second transformer coil penetrable by the rigid member upon raising and/or lowering of a said load by the winch, wherein the first and second transformer coils are spaced apart with respect to each other along an axis defined by the rope (the axis being defined, for example, when the rope is in a still, i.e. non-moving position, such that the axis is parallel to the gravitational force), and wherein, when the rigid member penetrates each of the first and second transformer coils, the rigid member and the first and second transformer coils form a transformer for said wirelessly charging of the electrical device. Such a configuration may be particularly advantageous, in particular as no further parts may be needed in order to form the transformer. A varying electric current may be applied in the first transformer coil, thereby wirelessly charging the electrical device via the transformer. The second transformer coil may hereby, similarly to the first transformer coil, be arranged with its winding(s) around an axis defined by the rope (the axis being defined, for example, when the rope is in a still, i.e. non-moving position, as outlined above). As the rope is wound and/or unwound, the rigid member may be driven into and out of the second transformer coil.

Some kind of electrical coupling between the electrical device and the second transformer coil may hereby be provided such that the electrical device can be charged wirelessly using the transformer formed by the first and second transformer coils and the rigid member.

In some variants, the winch further comprises said load comprising said electrical device, wherein the second transformer coil is comprised in or coupled to the load. This may be beneficial as it may ensure, for example, that the rigid member, which may ultimately be coupled or connected to the load, may penetrate the second transformer coil, thereby guaranteeing parts of the transformer being formed in a certain position of the load given the winding position of the rope.

In some variants of the winch, the rigid member comprises control electronics for controlling the wireless charging of the electrical device and/or for controlling raising and/or lowering the load. It may be particularly advantageous for the control electronics to be used for controlling both wirelessly charging the electrical device and raising/lowering the load, so as to provide for a single unit in the form of control electronics being capable of performing multiple actions.

In some example implementations, the winch further comprises a sensing unit configured to sense a change of inductance and/or current flow in one or both of the first and second transformer coils, and wherein the winch is configured to stop winding or unwinding, respectively, the rope (to raise or lower, respectively, the load) in response to said sensing of said change of inductance and/or current flow in one or both of the first and second transformer coils. The transformer coils may hereby be used as a contactless proximity switch and/or an overwinding prevention switch. Therefore, in case the first and second transformer coils are within certain proximity (i.e. within a threshold distance), winding or unwinding, respectively, of the rope may be stopped.

In some variants, the above-specified control electronics may be used as or be comprised in the sensing unit.

The position of the load at which winding or unwinding, respectively, of the rope may be stopped due to the transformer coils being spaced apart by a distance which is less than the threshold distance, may be used as a reference position (e.g. zero position) of the load at which charging of the electrical device (for example the battery) may be initiated.

In these variants in which the transformer coils may be used as a contactless proximity switch and/or an overwinding prevention switch, the transformer coils may be used as a trigger not only for overwinding prevention, but also (additionally or alternatively) as a trigger for when wireless charging of the electrical device should be initiated.

In some example implementations of the winch, the rigid member comprises steel. This may be particularly advantageous for various reasons. For example, steel may be preferential as it exhibits relatively high hardness, thereby allowing for a particularly stable connection to be provided, for example, between the rigid member and the rope and/or the load. As will be appreciated, steel is also a relatively cheap material to obtain. Further still, variants of the winch in which the rigid member may be configured as a transformer core for wirelessly charging an electrical device of the load, steel may provide for the ferromagnetic properties of the rigid member.

We further describe a method for wirelessly charging an electrical device comprised in or coupled to a load raisable and/or lowerable by a winch, the method comprising: providing the winch comprising: a rigid member coupled to a rope of the winch, wherein the rigid member comprises a ferromagnetic or ferrimagnetic material, and a first transformer coil arranged around an axis defined by the rope (which axis may be defined, for example, when the rope is in a still, non-moving position such that the axis is parallel to the direction of the gravitational force); coupling the rigid member to the load; providing a second transformer coil and coupling the second transformer coil to the electrical device comprised in or coupled to the load, wherein the second transformer coil is arranged around the rigid member (so that the rigid member penetrates the winding(s) of the second transformer coil); and aligning the first and second transformer coils and the rigid member relative to each other along the axis defined by the rope such that they form a transformer; and charging the electrical device wirelessly using the transformer formed by the first and second transformer coils and the rigid member.

The alignment between the first and second transformer coils and the rigid member relative to each other may be changed from a first position, in which a transformer is formed and in which the electrical device may be charged wirelessly using the transformer, to a second position in which no complete transformer is formed by the first and second transformer coils and the rigid member, thereby preventing charging of the electrical device wirelessly.

The method may hereby make use of, in particular, the rigid member being exploited as a transformer core. At the same time, as outlined above with regard to variants and example implementations of the winch, the rigid member may additionally allow for reducing swaying of the load when being raised and/or lowered by the winch.

In some examples, the winch may comprise a source for the varying electrical current which is to be applied in the first transformer coil. Alternatively, the source for the varying electrical current may be external to the winch. As will be appreciated, charging the electrical device wirelessly using the transformer will be readily known to those with skill in the art.

As will be appreciated, any preferred examples and implementations of the winch as outlined above may be taken into consideration and used in variants of the method as specified above and as outlined in the following.

In some example implementations of the method, said charging of the electrical device wirelessly using the transformer formed by the first and second transformer coils and the rigid member comprises applying a varying electrical current in the first transformer coil. Wirelessly charging the electrical device may hereby be performed faster compared to coreless charging methods and systems, using primarily features and components of example implementations of the winch as described herein.

In some variants of the method, said aligning of the first and second transformer coils and the rigid member along the axis defined by the rope comprises winding or unwinding, respectively, the rope to raise or lower, respectively, the load using the winch. Switching between states of the winch in which, on the one hand, the electrical device may be charged wirelessly and, on the other hand, in which no wirelessly charging of the electrical device is possible, may simply be performed by raising and/or lowering the load using the winch.

### BRIEF DESCRIPTION OF THE DRAWINGS

These and other aspects of the invention will now be further described, by way of example only, with reference to the accompanying figures, wherein like reference numerals refer to like parts, and in which:
Figures 1a to c show side views of schematic illustrations of winches according to the prior art;
Figures 2a to c show side views of schematic illustrations of a winch according to some example implementations as described herein;
Figures 3a to c show side views of schematic illustrations of winches according to further example implementations as described herein; and
Figure 4 shows a flowchart of a method according to some example implementations as described herein.

### DETAILED DESCRIPTION OF PREFERRED EMBODIMENTS

As outlined above, example implementations of the winch as described herein allow for reducing swaying of a load during movement, in particular during fast movement above a certain threshold velocity.

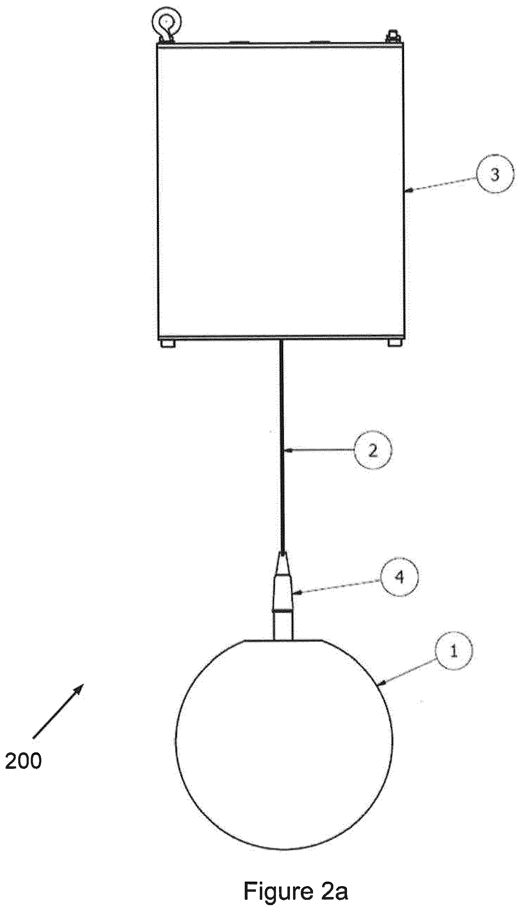

Figure 2a depicts a side view of a schematic illustration of a winch 200 according to some example implementations as described herein.

In this example, a load 1 (which may or may not be comprised in what is dubbed the winch) is attached to a rigid member 4. In this example, the rigid member 4 is formed by a steel connector and a semi-rigid cable which are covered by a plastic cover. The plastic cover allows for hiding the steel connector and the semi-rigid cable, in particular to thereby prevent deterioration of the steel connector and the semi-rigid cable given any environmental exposures.

In this example, the rigid member 4 is firmly connected to the load 1.

In some example implementations, the load 1 and the rigid member 4 (in particular, in some variants, the steel connector) may have predefined, corresponding mating parts allowing for a firm connection to be realized between the rigid member 4 and the load 1.

In this example, the rigid member 4 is coupled to a rope 2 of the winch 200. In some variants, a fixed connection between the rigid member 4 and the rope 2 of the winch 200 may be provided.

The winch 200 further comprises, in this example, a gearbox 3 which may be used in order to wind or unwind the rope 2.

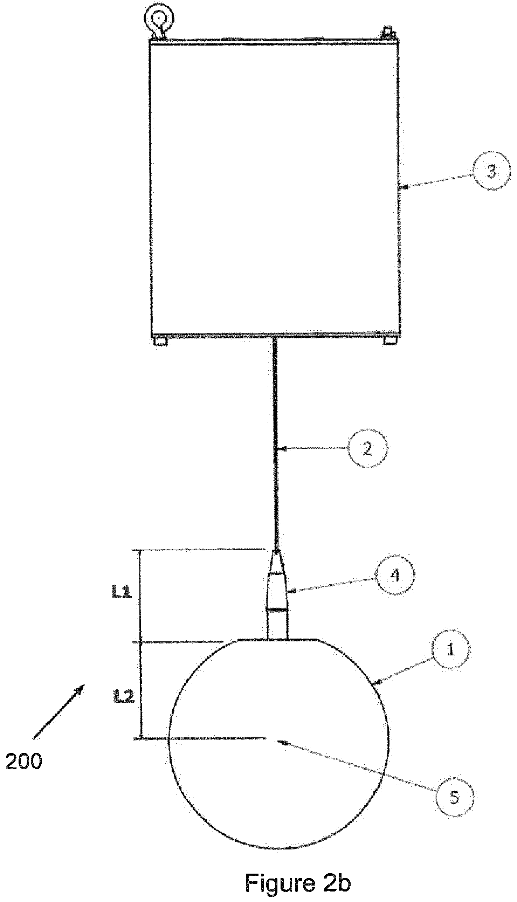

Figure 2b depicts a schematic side view of the winch 200 with further labeling for illustrative purposes according to some example implementations as described herein.

As can be seen from Figure 2b, a length of the load 1 from, in this example, its center of mass 5 to the point at which the load 1 is connected to the rigid member 4 is denoted as L2. The rigid member 4 increases the effective length of the load 1 by a value denoted as L1 to a total effective length of the load of L1 + L2. As outlined above, this may stabilize the load and may allow for faster movement (compared to the winch 100 as depicted in Figures 1a and b) of the load 1 when being raised and/or lowered by the winch 200, without the load 1 starting to sway or oscillate around the axis defined by the rope 2 or around an axis parallel to the gravitational force.

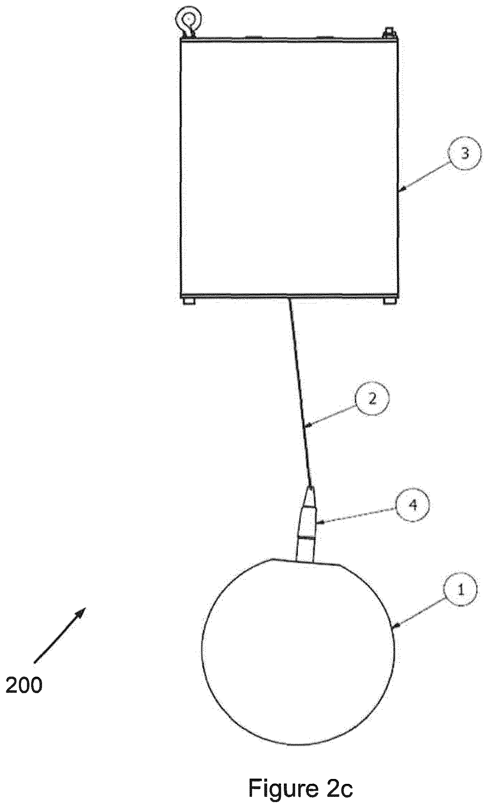

Figure 2c depicts a snapshot of a schematic side view of the winch 200 when the load 1 is being raised and/or lowered by the winch 200 according to some example implementations as described herein.

As can be seen from a comparison between the winch 100 shown in Figure 1b and the winch 200 depicted in Figure 2c, by increasing the effective length of the load by adding the rigid member 4, the direction along which the rope 2 extends does not deviate as much from its original orientation (parallel to the gravitational force) when the load is being raised and/or lowered by the winch 200. In some examples, the part of the rigid member 4 which is connected to the rope 2 is that part of the rigid member 4 which may sway the most during movement of the load. However, in particular in view of the load 1 exhibiting an inert mass, the load 1 itself may not sway as much as, in this example, the top part of the rigid member 4 during movement given the increased effective length of the load.

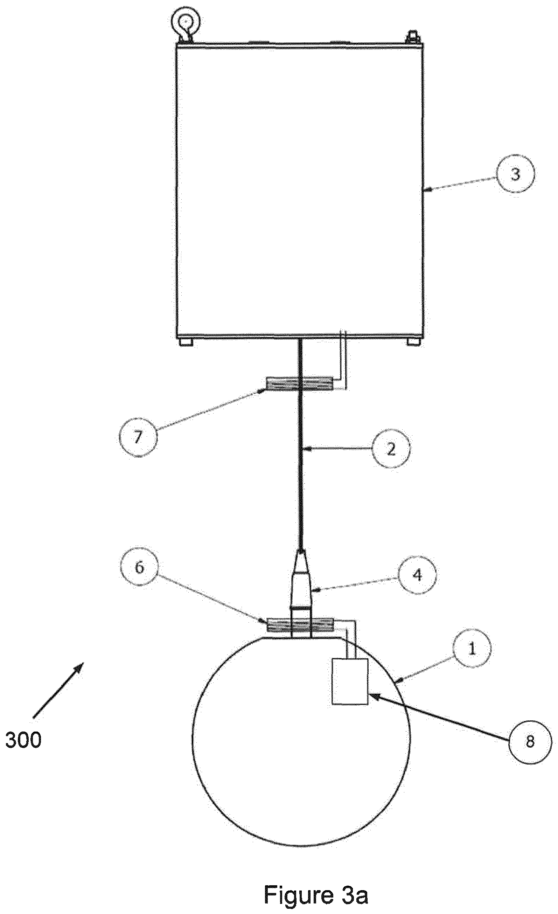

Figure 3a depicts a side view of a schematic illustration of a winch 300 according to some example implementations as described herein.

In this example, the rigid member 4 comprises (or, in some variants, is entirely made of) steel or another ferromagnetic or ferrimagnetic material. The rigid member 4 may hereby be used as a transformer core for a contactless (wireless) charging of any electrical device, such as electrical device 8, which may be coupled to or be comprised in (for example, be inside) the load.

In this example, a first transformer coil 7 is coupled to the gearbox 3 of the winch 300. As will be appreciated, the first transformer coil 7 may be arranged on another part of the winch 300. The first transformer coil 7 is, in this example, arranged on the winch 300 such that the rope 2 passes through the winding(s) of the first transformer coil 7.

Further to the first transformer coil 7 at the winch side, in this example, a second transformer coil 6 with one or more windings is provided at the load side. In this example, the second transformer coil 6 is coupled to the electrical device 8 which is placed inside the load 1. However, as will be appreciated, in some example implementations, the second transformer coil 6 may alternatively or additionally be coupled to another part(s) of the load 1, in which case wiring may, in some examples, be used to electrically couple or connect the second transformer coil 6 and the electrical device 8 with each other.

As can be seen, the second transformer coil 6 is, in this example, arranged such that the rigid member 4 penetrates the winding(s) of the second transformer coil 6.

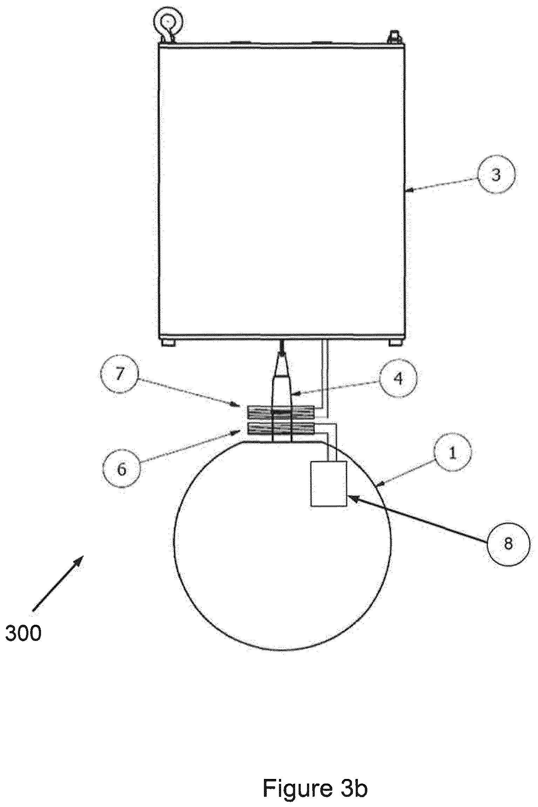

Figure 3b depicts a side view of a schematic illustration of the winch 300 shown in Figure 3a in a different state according to some example implementations as described herein.

Compared to the state of the winding (i.e. raising/lowering position of the load) in Figure 3a, the load 1 is raised as shown in Figure 3b to such an extent that the rigid member 4 penetrates each of the first and second transformer coils. In this state, the rigid member 4 together with the first and second transformer coils all together form a transformer which may be used to wirelessly charge the electrical device 8. A much faster charging compared to coreless charging systems may hereby be achieved.

In this example, depending on the position of the load 1 (and hence the second transformer coil 6 and the rigid member 4) relative to the first transformer coil 7, the electrical device 8 may be charged or chargeable (Figure 3b), or not (Figure 3a).

Furthermore, in this example implementation, the transformer may be formed at a top position of the winch. However, as will be appreciated, one or more additional or alternative positions may be predetermined at which the transformer may be formed by the rigid member 4 and the first and second transformer coils.

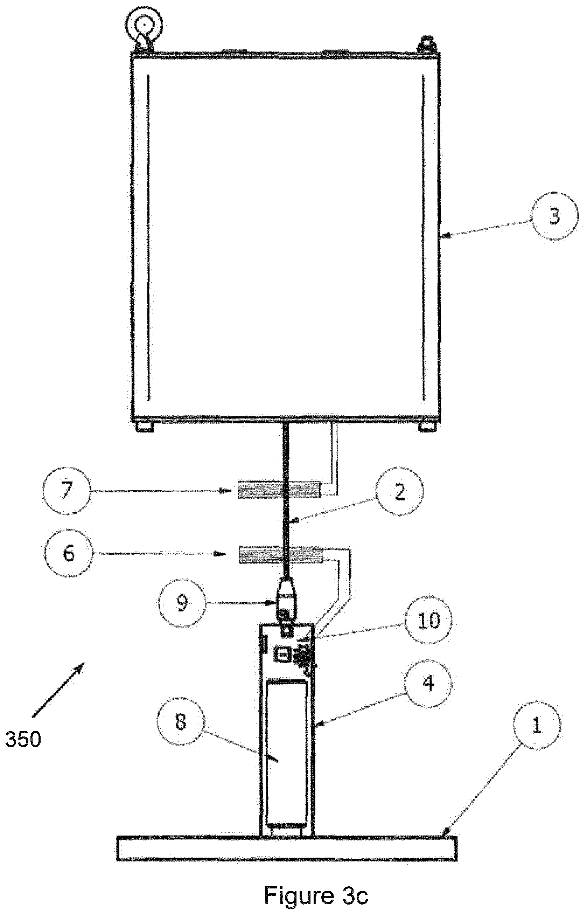

Figure 3c depicts a side view of a schematic illustration of a winch 350 according to some example implementations as described herein.

In this example, the rigid member 4 comprises a battery 8, which may preferably be a cylindrical battery. A cylindrical battery may hereby ensure that a rotational symmetry may not be further distorted so that the stability while the load 1 is being raised or lowered may be maintained (as much as possible). For example, if the rope 2 rotates around its own longitudinal axis when the load 1 is being raised or lowered, no further forces may be generated which would otherwise result in a certain swaying or oscillating motion of the structure.

In this example, the rigid member 4 further comprises a connecting device 9 and control electronics 10. The connecting device 9 is, in this example, used to attach the rope 2 to the rigid member 4. The control electronics 10 may be used for wireless charging and/or control of the load 1 in particular in case the load is or comprises, for example, a lighting device (such as an OLED lighting panel).

In some examples, reference numeral 10 refers to a sensing unit which is configured to sense a change of inductance and/or current flow in one or both of the first and second transformer coils, wherein the winch is configured to stop winding or unwinding, respectively, the rope 2 in response to said sensing of said change of inductance and/or current flow in one or both of the first and second transformer coils. As outlined above, the control electronics 10 may be constituted by or be comprised in the sensing unit.

As can be seen in Figure 3c, in this example, the coil 6 is moved to a location above the rigid member 4 and on top, i.e. above the connecting device 9.

This configuration of the winch 350 in which the coil 6 is moved above the rigid member 4 (and in particular the connecting device 9 of the rigid member 4) allows that the rigid member 4 may not necessarily have to be entirely made out of a ferromagnetic or ferrimagnetic material. Only a part of the rigid member 4 may be made of a ferromagnetic or ferrimagnetic material. In some examples, only the connecting device 9 is made of or comprises a ferromagnetic or ferrimagnetic material. As will be appreciated, providing only a part of the rigid member 4 with a ferromagnetic or ferrimagnetic material may still be sufficient so that the part which is made of a ferromagnetic or ferrimagnetic material together with the coils 6 and 7 may form a transformer used as outlined above, for example for wirelessly charging an electrical device.

In some examples, the electrical device which may be wirelessly charged may be the battery 8. The electric energy which may hereby be stored in the battery 8 may be used in order to (electrically) power the load 1, which may be, for example, a lighting device, such as an OLED lighting panel.

In some example implementations, the coil 6 may be moved to be on top of the rigid member 4.

In example implementations in which coils 6 and 7 are used, the coils 6 and 7 may be exploited as a contactless proximity switch or overwinding prevention switch. When the coil 6 comes into the proximity (i.e. within a certain threshold distance which may depend on certain electrical and/or magnetic properties of the coils) of coil 7, electronics (which may be constituted by or be comprised in the control electronics 10) inside the winch may sense a change of inductance and/or current flow which may be used as a trigger to stop movement, i.e. stop winding or unwinding the rope 2. In some examples, this position at which movement is stopped may be used as a reference position (for example zero position) of the load. Such a reference position may be used, for example, to determine a current position of the load to thereby identify whether, for example, wireless charging of the electrical device may be possible in the current position. This reference position may alternatively be used as a charging position for the electrical device, which may be the battery 8.

It will be understood that in each of the example implementations of the winches as described herein, further features of the winches may be omitted for illustrative purposes. Such features include, but are not limited to, a drum around which the rope may be wound, an electrical current source, electrical wiring, parts of the gearbox such as a motor, and other features.

Furthermore, in one or more of the example implementations of the winches as described herein, the load (which may, in some variants, comprise or be coupled to one or both of the electrical device and the second transformer coil) may be a separate part distinct from the winch to which the load may be coupled or connected. Alternatively, in some variants, the load (which may, in some example implementations, comprise or be coupled to one or both of the electrical device and the second transformer coil) may be integral to, i.e. comprised in the winch.

Further still, in example implementations of the winches as described herein, the rigid member may be fixed solidly to the load. This solid fixation may allow for increasing stability when raising or lowering the load due to the increase of the effective length of the load.

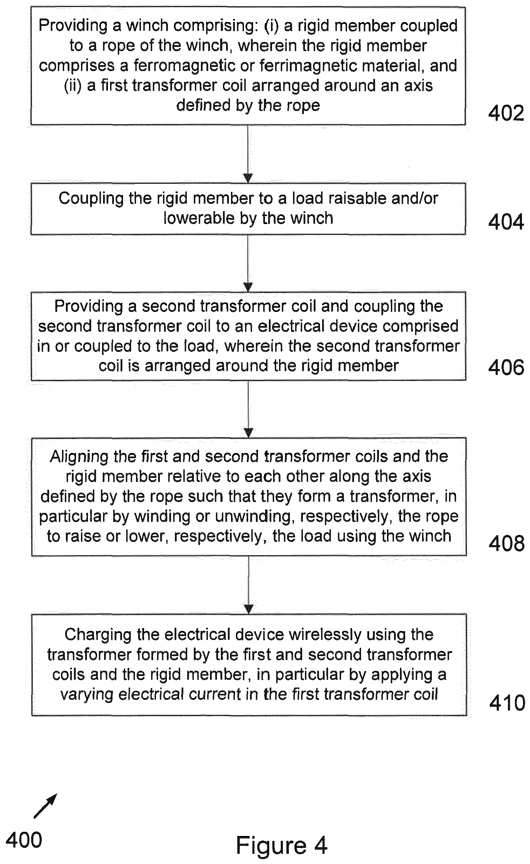

Figure 4 shows a flowchart of a method 400 according to some example implementations as described herein.

The method 400 comprises, in this example, at step 402, providing a winch comprising: (i) a rigid member coupled to a rope of the winch, wherein the rigid member comprises a ferromagnetic or ferrimagnetic material, and (ii) a first transformer coil arranged around an axis defined by the rope. The axis may hereby be defined by the rope when the rope is in a still position, i.e. when the rope is not wound or unwound, such that the defined axis may, in some examples, be parallel to the direction of the gravitational force.

At step 404, the rigid member is coupled to a load raisable and/or lowerable by the winch.

A second transformer coil is then provided, at step 406, which is coupled to an electrical device comprised in or coupled to the load. The second transformer coil is, in this example, arranged around the rigid member. In other words, the second transformer coil may be arranged such that the rigid member penetrates the winding(s) of the second transformer coil.

At step 408, the first and second transformer coils and the rigid member are aligned relative to each other along the axis defined by the rope (for example, when the rope is in a still, non-moving position) such that the first and second transformer coils and the rigid member form a transformer. This may in particular be achieved by winding or unwinding, respectively, the rope to raise or lower, respectively, the load using the winch.

At step 410 of the method 400, the electrical device is charged wirelessly using the transformer formed by the first and second transformer coils and the rigid member. This may in particular be achieved by applying a varying electrical current in the first transformer coil.

It will be understood that the order of certain steps of the method 400, for example steps 402 to 406, may be exchanged, and such alterations are therefore considered to be within the scope of the corresponding claims appended hereto.

No doubt many other effective alternatives will occur to the skilled person. It will be understood that the invention is not limited to the described embodiments and encompasses modifications apparent to those skilled in the art and lying within the scope of the claims appended hereto.

## Claims

1. A winch (200, 300, 350) comprising:
a rope (2); and
a rigid member (4) coupled, at a first end portion of the rope (2), to the rope (2), wherein the rigid member (4) is coupleable to a load (1) raisable and/or lowerable by the winch (200, 300, 350), and wherein the rigid member (4) is configured to substantially increase an effective length, measured along an axis defined by the rope, of a said load (1) to stabilize said load (1) when being raised and/or lowered by the winch (200, 300, 350).

2. A winch (200, 300, 350) as claimed in claim 1, coupled to the load (1), wherein the rigid member (4) is configured to increase the effective length of the load (1) by 10%, preferably by 20%, more preferably by 30%, more preferably by 40%, more preferably by 50%, more preferably by 60%, more preferably by 70%, more preferably by 80%, more preferably by 90%, more preferably by 100%, or more preferably by more than 100%.

3. A winch (200, 300, 350) as claimed in claim 1 or 2, further comprising a gearbox (3) coupled, at a second end portion of the rope (2), to the rope (2), wherein the first end portion of the rope (2) is opposite to the second end portion of the rope (2), and wherein the gearbox (3) is configured to wound and/or unwound the rope (2).

4. A winch (200, 300, 350) as claimed in any preceding claim, wherein the rigid member (4) comprises a solid connector fixed to the rope (2).

5. A winch (200, 300, 350) as claimed in any preceding claim, wherein the rigid member (4) comprises a semi-rigid cable.

6. A winch (200, 300, 350), in particular as claimed in any preceding claim, wherein the rigid member (4) comprises a ferromagnetic or ferrimagnetic material, and wherein the rigid member (4) is configured as a transformer core for wirelessly charging an electrical device (8) of a said load (1).

7. A winch (200, 300, 350) as claimed in claim 6, further comprising a first transformer coil (7) penetrable by the rigid member (4) upon raising and/or lowering of a said load (1) by the winch (200, 300).

8. A winch (200, 300, 350) as claimed in claim 7, further comprising a second transformer coil (6) penetrable by the rigid member (4) upon raising and/or lowering of a said load (1) by the winch (200, 300), wherein the first and second transformer coils are spaced apart with respect to each other along the axis defined by the rope, and wherein, when the rigid member (4) penetrates each of the first and second transformer coils, the rigid member (4) and the first (7) and second (6) transformer coils form a transformer for said wirelessly charging of the electrical device (8).

9. A winch (200, 300, 350) as claimed in claim 8, further comprising said load (1) comprising said electrical device (8), wherein the second transformer coil (6) is comprised in or coupled to the load (1).

10. A winch (200, 300, 350) as claimed in claim 8 or 9, further comprising a sensing unit configured to sense a change of inductance and/or current flow in one or both of the first and second transformer coils, and wherein the winch is configured to stop winding or unwinding, respectively, the rope (2) in response to said sensing of said change of inductance and/or current flow in one or both of the first and second transformer coils.

11. A winch (200, 300, 350) as claimed in any preceding claim, wherein the rigid member (4) comprises steel.

12. A method (400) for wirelessly charging an electrical device comprised in or coupled to a load raisable and/or lowerable by a winch, the method comprising:
providing (402) the winch comprising:
a rigid member coupled to a rope of the winch, wherein the rigid member comprises a ferromagnetic or ferrimagnetic material, and
a first transformer coil arranged around an axis defined by the rope;
coupling (404) the rigid member to the load;
providing (406) a second transformer coil and coupling the second transformer coil to the electrical device comprised in or coupled to the load, wherein the second transformer coil is arranged around the rigid member;
aligning (408) the first and second transformer coils and the rigid member relative to each other along the axis defined by the rope such that they form a transformer; and
charging (410) the electrical device wirelessly using the transformer formed by the first and second transformer coils and the rigid member.

13. A method (400) as claimed in claim 12, wherein said charging (410) of the electrical device wirelessly using the transformer formed by the first and second transformer coils and the rigid member comprises applying a varying electrical current in the first transformer coil.

14. A method (400) as claimed in claim 12 or 13, wherein said aligning (408) of the first and second transformer coils and the rigid member along the axis defined by the rope comprises winding or unwinding, respectively, the rope to raise or lower, respectively, the load using the winch.

15. A method (400) as claimed in any one of claims 12 to 14, wherein the second transformer coil is comprised in the load.
